# EUROPEAN PATENT SPECIFICATION

(11) **EP 1 423 288 B1**
(45) Date of publication and mention of the grant of the patent: **07.11.2007**
(21) Application number: 02760790.2
(22) Date of filing: 30.08.2002
(51) Int. Cl.: B60J 5/04

(54) **SASH DOOR FOR AUTOMOBILE AND METHOD OF MANUFACTURING THE SAME**
VERFAHREN ZUR HERSTELLUNG EINES FENSTERRAHMENMODULS EINER KRAFTFAHRZEUGTÜR
PORTE D'AUTOMOBILE VITREE ET PROCEDE DE FABRICATION ASSOCIE

(30) Priority: 04.09.2001 JP 2001266657
(43) Date of publication of application: 02.06.2004
(73) Proprietor: HONDA GIKEN KOGYO KABUSHIKI KAISHA, Minato-ku, Tokyo 107-8556 (JP); Sankei Giken Kogyo Kabushiki Kaisha, Tokyo 115-0044 (JP)
(72) Inventor: Ogawa, Takashi, Wako-shi, Saitama 351-0113 (JP); Suzuki, Mikio, Wako-shi, Saitama 351-0113 (JP); Yamamoto, Takeshi, Wako-shi, Saitama 351-0113 (JP); Yamanaka, Takashi, Sankei Giken Kogyo K. K., Tokyo 115-0044 (JP); Sugimoto, Hideaki, Sankei Giken Kogyo K. K., Tokyo 115-0044 (JP); Iida, Kazunari, Sankei Giken Kogyo K. K., Tokyo 115-0044 (JP)
(74) Representative: Prechtel, Jörg
(86) International application number: PCT/JP2002/008797
(87) International publication number: WO 2003/022612

(56) References cited:
- DE-A- 19 728 546
- DE-A- 19 826 040
- US-B1- 6 241 307

## Description

The present invention relates to a sash door for automobiles and a method of manufacturing such a sash door.

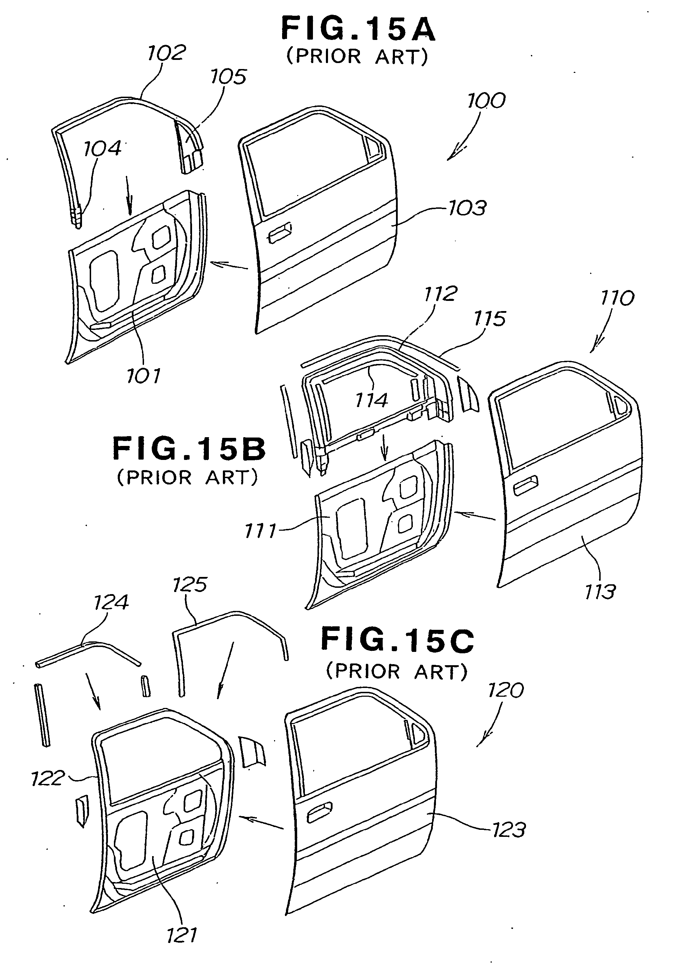

A sash door for automobiles has a sash body provided on an upper portion of a door inner panel, on the outside of which sash body, an outer sash is provided. The sash body is a sash to which a door glass is mounted in a vertically movable manner. Now a conventional sash door for automobiles will be described with reference to FIGS. 15A to 15C.

A sash door 100 of a first conventional example shown in FIG. 15A is a door with a roll sash, having a sash body 102 roll-formed in a substantially C shape in a side view, joined to an upper portion of a press-molded door inner panel 101, to the outside of which door inner panel 101, a press-molded door outer panel 103 is joined. In order to secure rigidity at the joints of the sash body 102, frame reinforcing members 104, 105 are provided.

A sash door 110 of a second conventional example shown in FIG. 15B is a door with a press sash, having a sash body 112 press-molded in a frame shape joined to an upper portion of a press-molded door inner panel 111, to the outside of which door inner panel 111, a press-molded door outer panel 113 is joined. The press-molded frame-shaped sash body 112 therefore has greater rigidity than the roll-formed C-shaped sash body 102 of the first conventional example shown in FIG. 15A. Reference numeral 114 denotes a glass run holder and 115 a weatherstrip holder. Another example of a sash body joined to an upper portion of a door inner panel is given in document JP9-267 638.

A sash door 120 of a third conventional example shown in FIG. 15C is a full door having a sash portion 122 integrally press-molded with a door inner panel 121, to the outside of which door inner panel 121 a press-molded door outer panel 123 is joined. Reference numeral 124 denotes a glass run holder, and 125 a weatherstrip holder.

The sash door 100 of the first conventional example shown in FIG. 15A requires reinforcing the joints of the roll-formed sash body 102 using the frame reinforcing members 104, 105 so as to secure rigidity at the joints. This increases the number of components, resulting in the sash door 100 of high cost.

The sash door 110 of the second conventional embodiment shown in FIG. 15B has the frame-shaped sash body 112 formed by press molding a large flat plate material. Forming a frame from a large flat plate material leaves large part of the flat plate material without being used. This results in low yields, increasing material cost. The frame-shaped sash body 112 requires different degrees of rigidity at its upper, lower, front and rear portions. Since a frame is formed from a large flat plate material, the entire thickness of the sash body 112 corresponds to the thickness of a portion to provide highest rigidity. This results in increase not only in material cost, but also in weight of the sash body 112.

For those reasons, the sash door 110 costs high and weighs much. The sash door 120 of the third conventional example shown in FIG. 15C has the same problems as the second conventional sash door 110. A sash door of low cost and lightweight is thus desired.

According to the present invention, as defined in claims 1 and 3, there is provided a sash door for an automobile, which comprises: a door inner panel; and a sash body joined to an upper portion of the door inner panel; wherein, the sash body is a frame member comprising a plurality of plate-shaped frame components joined to one another; and the thickness of at least one of the frame components is different from that of the other frame components.

With the sash door comprised of the frame member formed by joining the plate-shaped frame components, it becomes possible to freely combine the frame components of different sizes and thicknesses. Combination of the frame components of the respectively required dimensions and thicknesses enables using almost all of the materials, resulting in very good yields. In addition, the thickness of at least one of the frame components is made different from the thickness of the other frame components, which eliminates portions of excessive thickness and allows reduction in weight of the sash body and reduction in material cost of the sash body. Further, no reinforcing member for securing the rigidity of the sash body is required, unlike the conventional roll-formed sash body, allowing the reduction in the number of components.

The sash body is an integrally molded part made by joining together and then press molding the frame components. Yields are therefore substantially improved as compared with the conventional case of press molding a large flat plate material to provide a sash body.

The frame components comprise a lower frame member mounted to the door inner panel, an upper frame member positioned above the lower frame member, a front frame member connecting a front end of the lower frame member and a front end of the upper frame member, and a rear frame member connecting a rear end of the lower frame member and a rear end of the upper frame member. Thus joining together the frame components of the respectively required dimensions and thicknesses as the upper, lower, front and rear frame members allows the formation of the frame member. The degrees of rigidity necessary for the upper, lower, front and rear frame members can be individually sufficiently secured. No portion of excessive thickness exists and partial provision of a reinforcing member is not required.

In a preferred from, the space between the lower frame member and the upper frame member is configured to become smaller toward the front of the vehicle; and the thickness of the front frame member is set greater than the thicknesses of the lower frame member, the upper frame member and the front frame member. As in a sash body of a front sash door, for example, when the space between the lower and upper frame members becomes smaller toward the front of the vehicle, the degree of freedom in designing the shape of the front frame member is lower than those of the other frame members. This is more significant especially in forming the sash body by press molding. It is thus not easy to provide, after press molding, the front frame member with a cross-sectional shape achieving desired rigidity. The present invention makes the thickness of the front frame member greater than the thicknesses of the other frame members, reliably securing sufficient rigidity necessary for the front frame member.

It is desirable that the space between the lower frame member and the upper frame member is configured to become smaller toward the rear of the vehicle; and the thickness of the rear frame member is set greater than the thicknesses of the lower, upper and rear frame members. When, as in a sash body of a rear sash door, for example, the space between the lower and upper frame members becomes smaller toward the rear of the vehicle, the degree of freedom in designing the shape of the rear frame member is lower than those of the other frame members. This is more significant especially when the sash body is formed by press molding. Thus it is not easy to form the rear frame member in a cross-sectional shape providing desired rigidity after press molding. The present invention set the thickness of the rear frame member greater than the thicknesses of the other frame members, securing sufficient rigidity necessary for the rear frame member.

The thicknesses of the front frame member and the rear frame member are set greater than the thicknesses of the lower frame member and the upper frame member. As compared with the lower frame member mounted to the door inner panel and the upper frame member abutting against the roof when the door is closed, the front and rear frame members connecting the lower and upper frame members generally require greater rigidity. The present invention sets greater the thicknesses of the front and rear frame members requiring higher rigidity than the thicknesses of the lower and upper frame members which may have relatively lower rigidity, thereby securing sufficient rigidity necessary for the front and rear frame members. The thicknesses of the lower and upper frame members can be reduced, resulting in reduction in weight of the sash body. In this manner, the rigidity of the frame components can be provided reasonably in balance, reducing the weight of the sash body.

The thickness of the lower frame member may be set smaller than the thicknesses of the upper frame member, the front frame member and the rear frame member. The lower frame member, which is mounted to the door inner panel, may have smaller rigidity than the upper, front and rear frame members. Setting the thickness of the lower frame member of smaller rigidity smaller than the thicknesses of the upper, front and rear frame members allows the reasonable and balanced setting of the rigidity of the frame components and the reduction in weight of the sash body.

### BRIEF DESCRIPTION OF THE DRAWINGS

FIG. 1 is a side view of an automobile having sash doors according to the present invention;
FIG. 2 is an exploded view of a right front sash door shown in FIG. 1;
FIG. 3 is a view of a front sash body shown in FIG. 2, taken from inside the vehicle;
FIG. 4 is a cross-sectional view of an upper frame member taken along line 4 - 4 in FIG. 3;
FIG. 5 is a cross-sectional view of a rear frame member taken along line 5 - 5 in FIG. 3;
FIG. 6 is a cross-sectional view of a lower forward portion of the rear frame member taken along line 6 - 6 in FIG. 3;
FIG. 7 is a cross-sectional view of a lower frame member taken along line 7 - 7 in FIG. 3;
FIG. 8 is a cross-sectional view of a lower portion of a front frame member taken along line 8 - 8 in FIG. 3;
FIG. 9 is a cross-sectional view of an upper portion of the front frame member taken along line 9 - 9 in FIG. 3;
FIG. 10A illustrates a plurality of frame components die-cut from a plurality of flat plates of different thickness, FIG 10B is a cross-sectional view taken along line 10B - 10B in FIG. 10A, and FIG. 10C is a cross-sectional view taken along line 10C - 10C in FIG. 10A;
FIG. 11 is a schematic diagram illustrating the steps of disposing the frame components prepared in FIG. 10A in a predetermined arrangement, joining them, and press molding them to manufacture the front sash body;
FIG. 12 is a view of a rear sash body according to the present invention, taken from inside the vehicle;
FIG. 13A illustrates a plurality of frame components die-cut from a plurality of flat plates of different thickness for the manufacture of the rear sash body shown in FIG. 12, FIG. 13B is a cross-sectional view taken along line 13B - 13B in FIG. 13A, and FIG. 13C is a cross-sectional view taken along line 13C - 13C in FIG. 13A;
FIG. 14 is a schematic diagram illustrating the steps of disposing the frame components prepared in FIG. 13A in a predetermined arrangement, joining them, and press molding them to manufacture the rear sash body; and
FIGS. 15A to 15C are exploded perspective views illustrating conventional sash doors for automobiles.

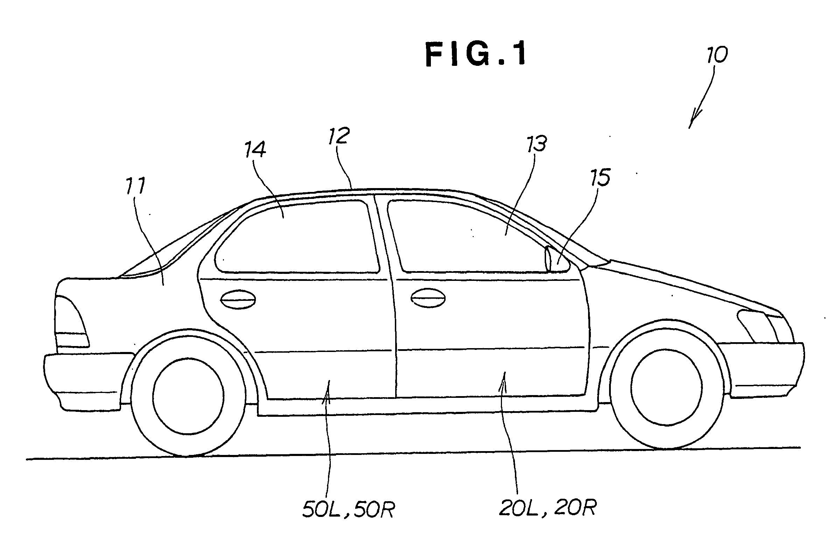

FIG. 1 illustrates an automobile 10 provided with sash doors according to the present invention. The automobile 10 is a four-door vehicle having a vehicle body 11 provided with left and right front sash doors 20L, 20R (the left sash door is invisible in the figure) and left and right rear sash doors 50L, 50R (the left sash door is invisible in the figure). The left and right front sash doors 20L, 20R are in a symmetrical relationship to one another and have otherwise the same structure. The left and right rear sash doors 50L, 50R are also in a symmetrical relationship to one another and have otherwise the same structure. The following description thus refers to the right sash doors. In the figure, reference numeral 12 denotes a roof, 13 and 14 door glasses, and 15 a door mirror.

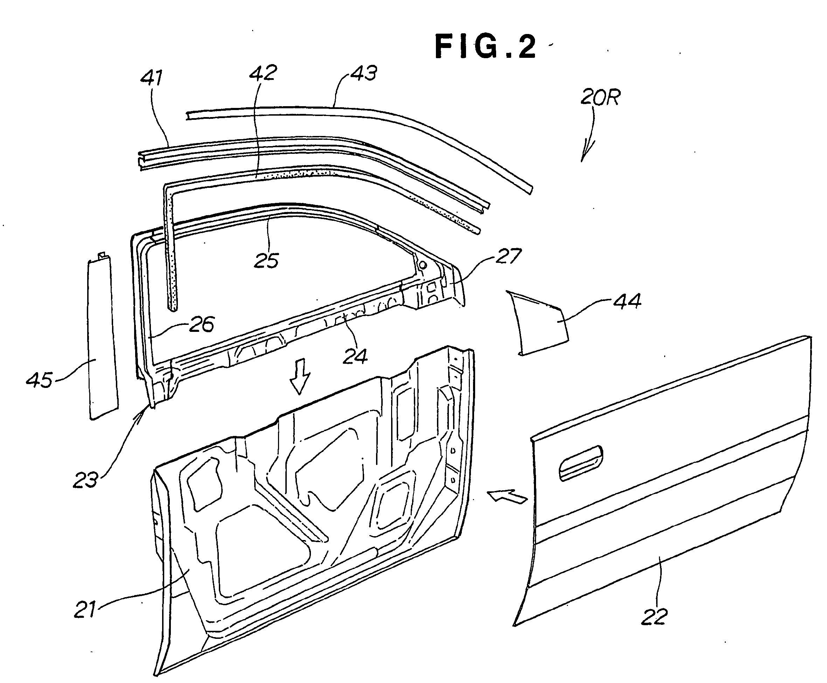

Referring to FIG. 2, the right front sash door 20R is a door member including a door inner panel 21, a door outer panel 22 joined to the outside of the door inner panel 21, a sash body 23 joined to an upper portion of the door inner panel 21, an outer sash 41 provided on the outside of the sash body 23, and a glass run 42 and a moulding 43 provided on the outside of the outer sash 41.

The door inner panel 21 and the door outer panel 22 are press-molded parts. The sash body 23 is a sash to which the door glass 13 shown in FIG. 1 is mounted in a vertically movable manner. In the figure, reference numeral 44 denotes an outer front panel and 45 an outer pillar panel.

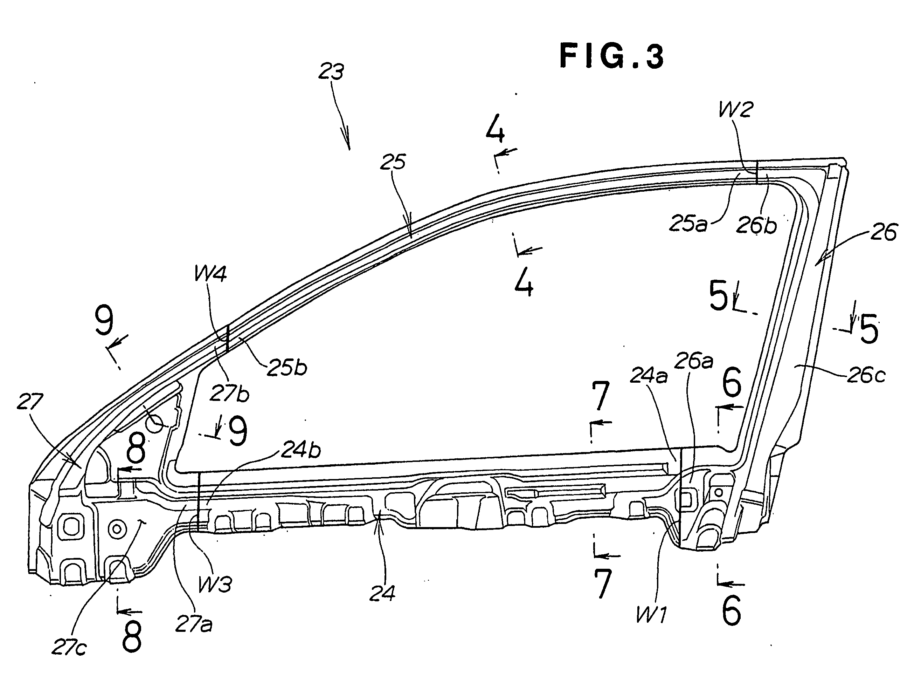

FIG. 3 is a side view of the sash body 23 shown in FIG. 2, taken from inside the vehicle. The sash body 23 is a frame member consisting of a horizontal lower frame member 24 mounted on the door inner panel 21 shown in FIG. 2, an upper frame member 25 positioned above the lower frame member 24, a rear frame member 26 connecting a rear end 24a of the lower frame member 24 and a rear end 2 5 a of the upper frame member 25, and a front frame member 27 connecting a front end 24b of the lower frame member 24 and a front end 25b of the upper frame member 25.

The lower frame member 24 is a horizontal elongated member extending longitudinally. The upper frame member 25 is an elongated member curved downward from the rear to the front. The rear frame member 26 is a vertically extending elongated member. The front frame member 27 is a member shorter than the rear frame member 26.

The lower, upper, rear and front frame members 24 to 27 are plate-shaped frame components. The frame components constitutes the frame member (sash body 23), including the lower, upper, rear and front frame members 24, 25, 26 and 27, which will be described in detail below.

The sash body 23 is, as described above, a frame member formed by joining the plate-shaped frame components (that is, lower, upper, rear and front frame members 24 to 27) to one another, with the space between the lower and upper frame members 24 and 25 becoming smaller toward the front of the vehicle, and also is an integrally-molded part with the frame components joined to one another and press molded.

With the thickness of the lower frame member 24 as t1, the upper frame member 25 as t2, the rear frame member 26 as t3 and the front frame member 27 as t4, the relationship between the thicknesses is provided as t1 < t2 < t3 < t4.

Thus forming the sash body 23 with the frame member made by joining the plate-shaped frame components (that is, the lower, upper, rear and front frame members 24, 25, 26, 27) to one another, and differentiating the thickness of at least one frame component of the frame components from the thickness of the other frame components, allow free setting and combination in dimension and thickness of the frame components. Combination of the frame components having the respectively required dimensions and thicknesses enables using almost all of the material. This results in substantially high yields. Further, differentiating the thickness of at least one frame component of the frame components from the thickness of the other frame components eliminates portions of excessive thickness. The sash body 23 of lightweight can thus be provided and the material cost of the sash body 23 can be reduced. Further, no reinforcing member for securing rigidity of a sash body is required, unlike the conventional roll-formed sash body. This results in reduction in the number of components.

In this manner, the right front sash door 20R (See FIG. 2) can be made lightweight and low cost. Further, the integral formation of the sash body 23 as a base in a frame shape enables increasing workability in mounting various components such as a seal to the sash body 23.

Furthermore, the sash body 23 is an integrally molded part made by joining the frame components to one another and press molding them, providing higher yields as compared with forming the sash body 23 by press molding a large flat plate material in a conventional manner. This enables further reduction in cost of the sash body 23.

Further, since the frame components include the lower, upper, rear and front frame members 24, 25, 26 and 27, joining the frame components of the respectively required dimensions and thicknesses as the lower, upper, rear and front frame members 24 to 27 allows the formation of the frame member.

Rigidity necessary for the lower, upper, rear and front frame members 24, 25, 26 and 27 can be secured sufficiently, respectively. Portions of excessive thickness are eliminated and need for partially providing a reinforcing member is also eliminated. In addition, it is not necessary to form the sash body 23 as a whole in a large complicated configuration in order to partially increase the rigidity of the sash body 23.

As in the sash body 23 of the front sash door 20R, when the space between the lower and upper frame members 24 and 25 becomes smaller toward the front of the vehicle, the degree of freedom in designing the shape of the front frame member 27 is generally lower than those of the other frame members 24 to 26. This is more significant especially in forming the sash body 23 by press molding. It is thus not easy to provide, after press molding, the front frame member 27 with a cross-sectional shape which achieves desired rigidity.

The present invention makes the thickness t4 of the front frame member 27 greater than the thicknesses t1 t2, t3 of the other frame members 24 to 26, reliably providing sufficient rigidity necessary for the front frame member 27.

As compared with the lower frame member 24 mounted on the door inner panel 21 (See FIG. 2) and the upper frame member 25 abutting against the roof 12 (See FIG. 1) of the vehicle body when the front sash door 20R is closed, the rear and front frame members 26, 27 connecting the lower and upper frame members 24, 25 generally require greater rigidity.

The present invention sets greater the thicknesses t3, t4 of the rear and front frame members 26, 27 requiring higher rigidity than the thicknesses t1, t2 of the lower and upper frame members 24, 25 which may have relatively lower rigidity, thereby securing sufficient rigidity necessary for the rear and front frame members 26, 27. The thicknesses t1, t2 of the lower and upper frame members 24, 25 can be reduced, reducing the weight of the sash body 23. In this manner, the rigidity of the frame components can be provided reasonably in balance, reducing the weight of the sash body 23.

The lower frame member 24, which is mounted on the door inner panel 21, may have smaller rigidity than the upper, rear and front frame members 25, 26 and 27. Setting the thickness t1 of the lower frame member 24 of smaller rigidity smaller than the thicknesses t2, t3, t4 of the upper, rear and front frame members 25 to 27 allows reasonable and balanced provision of the rigidity of the frame members 24 to 27 and reduction in weight of the sash body 23.

The rear frame member 26 is a member in the form of a C in a side view, with a lower front end portion 26a and an upper front end portion 26b extended forward. The lower front end portion 26a is joined to the rear end 24a of the lower frame member 24 along join line W1. The upper front end portion 26b is joined to the rear end 25a of the upper frame member 25 along join line W2.

The front frame member 27 is a member in the form of a C in a side view, with a lower rear end portion 27a and an upper rear end portion 27b extended rearward. The lower rear end portion 27a is joined to the front end 24b of the lower frame member 24 along join line W3. The upper rear end portion 27b is joined to the rear end 25b of the upper frame member 25 along join line W4.

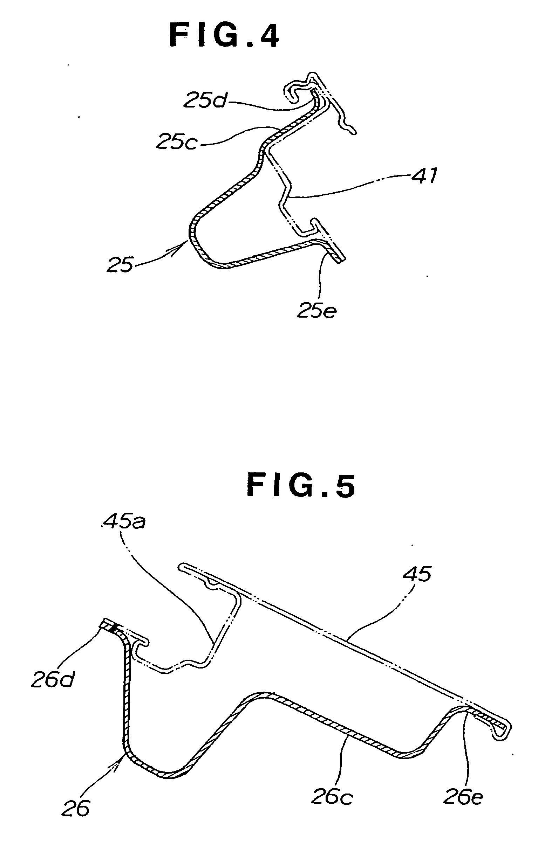

FIG. 4 illustrates the cross-sectional configuration of the upper frame member 25. The upper frame member 25 has a body with a substantially U-shaped cross section opening outside of the vehicle. The upper frame member 25 has an extension portion 25c extended from its upper edge to the outside of the vehicle. A first flange 25d is formed at the distal end of the extension portion 25c. A second flange 25e is formed at the lower edge of the upper frame member 25. The outer sash 41 shown in imaginary lines is provided on the outside of the upper frame member 25.

FIG. 5 illustrates the cross-sectional configuration of the rear frame member 26. The rear frame member 26 has a body with a substantially U-shaped cross section opening outside of the vehicle, being integrally formed with a flat extension portion 26c extending toward a center pillar of the vehicle body (to the right in the figure) and two flanges (an upper first flange 26d and a lower second flange 26e) on its longitudinally opposite sides. An outer pillar panel 45 shown in imaginary lines is provided on the outside of the rear frame member 26. The outer pillar panel 45 has a holder 45a to which the glass run 42 (See FIG. 2) is attached.

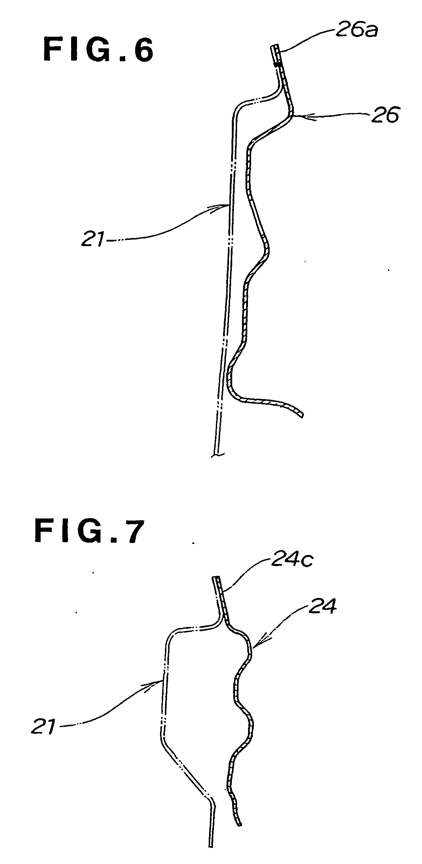

FIG. 6 illustrates the cross-sectional configuration of the rear frame member 26. The lower front end portion 26a of the rear frame member 26 is a longitudinally relatively flat portion, to the inside of which an upper portion of the door inner panel 21 shown in imaginary lines is joined.

FIG. 7 illustrates the cross-sectional configuration of the lower frame member 24. The lower frame member 24 is a longitudinally relatively flat part, forming on its upper side a flange 24c. To the inside of the flange 24c, an upper portion of the door inner panel 21 shown in imaginary lines is joined.

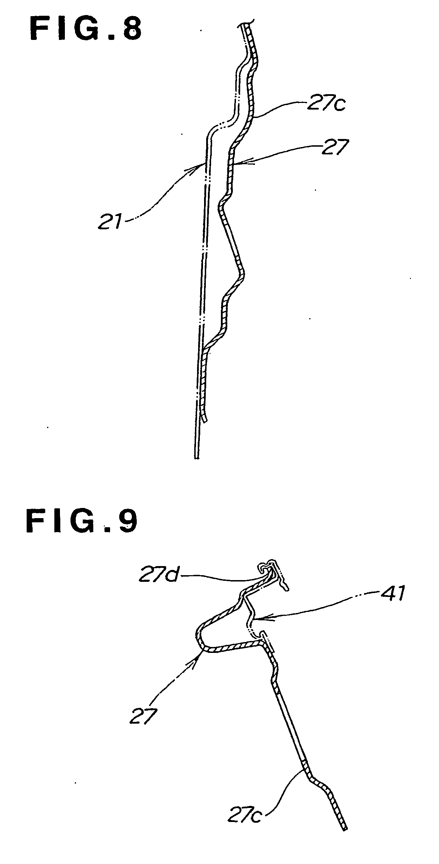

FIG. 8 illustrates the cross-sectional configuration of a lower portion of the front frame member 27. A longitudinally relatively flat extension portion 27c is provided in the lower portion of the front frame member 27. To the inside of the extension portion 27c, an upper portion of the door inner panel 21 shown in imaginary lines is joined.

FIG. 9 illustrates the cross-sectional configuration of an upper portion of the front frame member 27. The upper portion of the front frame member 27 has a body with a substantially U-shaped cross section opening outside the vehicle, being integrally formed with the flat extension portion 27c extending downward and a flange 27d at its upper end. The outer sash 41 shown in imaginary lines is provided on the outside of the front frame member 27.

Now, a method of manufacturing the right front sash door 20R of the above configuration will be described with reference to FIG. 2, FIGS. 10A to 10C, and FIG. 11.

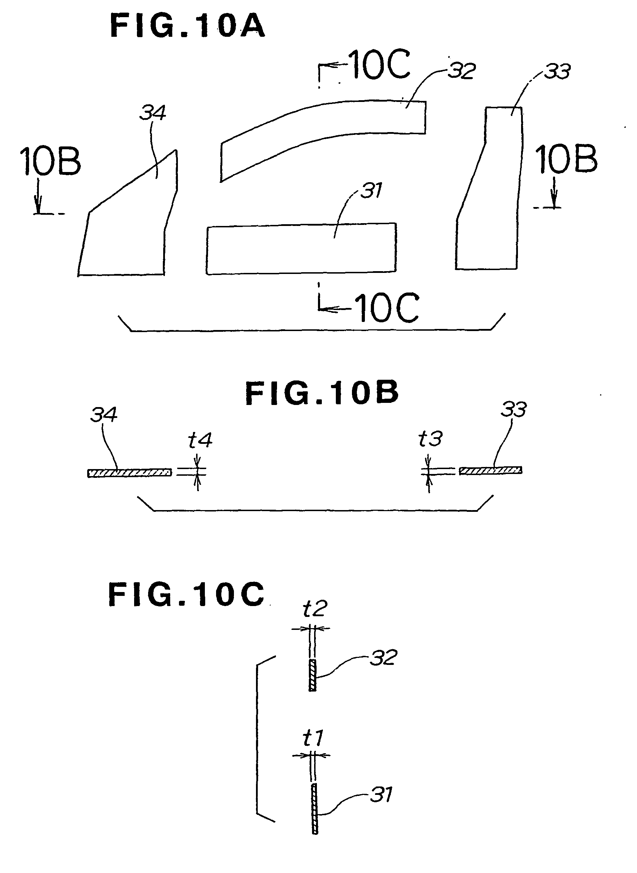

FIGS. 10A to 10C illustrate the arrangement and the cross sections of the frame components.

First, as shown in FIG. 10A, the frame components 31, 32, 33 and 34 are die-cut from a plurality of flat plates of different thickness, respectively (first step). The lower frame component 31 is a plate material corresponding to a lower frame member of a sash body. The upper frame component 32 is a plate material corresponding to an upper frame member of the sash body. The rear frame component 33 is a plate material corresponding to a rear frame member of the sash body. The front frame component 34 is a plate material corresponding to a front frame member of the sash body. That is, the frame components 31 to 34 are members cut out in the respectively required shapes for manufacturing the lower, upper, rear and front frame members 24 to 27 of the sash body 23 shown in FIG. 3.

As shown in FIGS. 10A and 10B, the thickness of the lower frame component 31 is t1, the upper frame component 32 t2, the rear frame component 33 t3, and the front frame component 34 t4. The relationship of the thicknesses is t1 < t2 < t3 < t4. The thickness t1 of the lower frame component 31 is set at 0.6 mm, t2 of the upper frame component 32 at 0.7 mm, t3 of the rear frame component 33 at 0.9 mm, and t4 of the front frame component 34 at 1.4 mm.

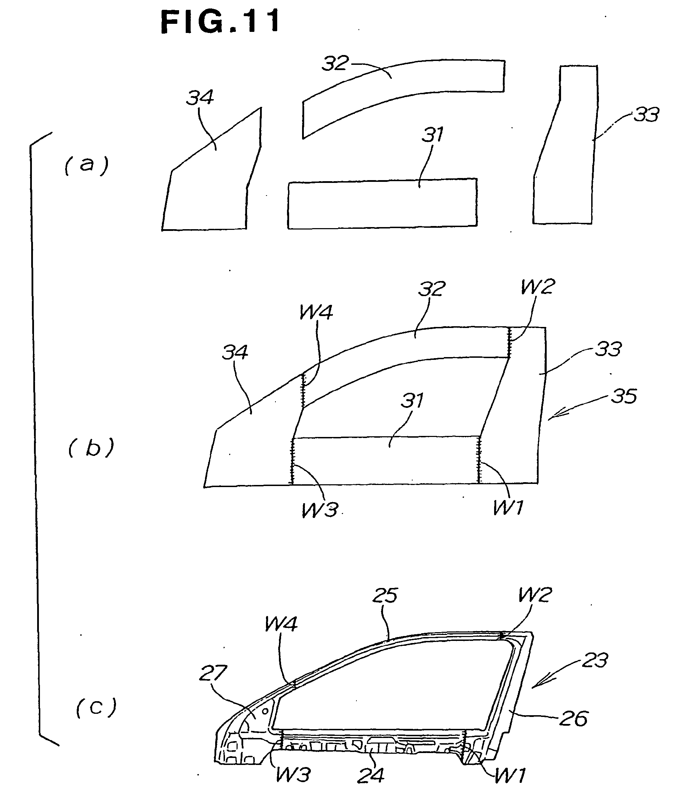

In FIG. 11(a), the frame components 31 to 34 made from plate material are arranged for preparation (second step).

Next, in FIG. 11(b), the frame components 31 to 34 are joined to one another along join lines W1 to W4, forming a frame member 35 (third step). The frame member 35 of such flat plate material is a collective blank prepared by joining sheets of different thickness (frame components 31 to 34) to one another. The joining together of the frame components 31 to 34 is performed by YAG laser welding.

The "YAG laser welding" is a known welding process utilizing YAG laser beams which enable precise welding. "YAG" is an abbreviation for "yttrium aluminum garnet," which has outstanding optical characteristics.

Next, in FIG. 11(c), the frame member 35 is press-molded to provide the sash body 23 (fourth step).

Next, in FIG. 2, the outer sash 41, the outer front panel 44, and the outer pillar panel 45 are joined to the sash body 23 (fifth step).

Then the sash body 23 is joined to the upper portion of the door inner panel 21 and the door outer panel 22 is joined to the outside of the door inner panel 21 (sixth step).

Next, as shown in FIG. 2, to the sash body 23 and the outer sash 41, the molding 43, elastic members such as the glass run 42 and the weatherstrip (not shown), the door glass 13 and a door attachment are mounted, completing the right front sash door 20R (seventh step).

The present invention is thus characterized in including, in the process of manufacturing the right front sash door 20R, the steps of forming the frame member 35 by joining the frame components 31 to 34 of plate material to one another and press molding the frame member 35 to provide the sash body 23.

Preparing the frame components 31 to 34 of the respectively required dimensions and thicknesses and joining the frame components 31 to 34 to one another facilitate the formation of the frame member 35 of an arbitrary shape and dimension. Then press molding the frame member 35 facilitates the manufacturing of the sash body 23.

The frame member 35 is a collective blank made by joining together the flat plate materials of different thickness. The collective blank is press molded to manufacture the sash body 23, with most part of the material being used. This results in substantially good yields, reducing the cost of material. The flat plate materials of different thickness are joined to one another to make the collective blank of a dimension necessary for the provision of the frame member 35, which eliminates portions of excessive thickness.

In this manner, the sash door 20R of lightweight can be manufactured easily at low cost. No reinforcing member for securing the rigidity of the sash body 23 is required, unlike the conventional roll-formed sash body. Also, no forming die for forming a frame reinforcing member is required. Joining together the frame components 31 to 34 by the YAG laser welding which allows precise welding allows more precise manufacturing of the frame member 35 before press molding.

Now the configuration of the right rear sash door 50R shown in FIG. 1 will be described. The sash door 50R has the same configuration as that of the right front sash door 20R, being a door member being provided with a door inner panel, a door outer panel joined to the outside of the door inner panel, a sash body joined to an upper portion of the door inner panel, an outer sash provided on the outside of the sash body, and a glass run and a molding provided on the outside of the outer sash. The sash body is a sash to which the door glass 13 is mounted in a vertically movable manner. Now description is made with respect to the right rear sash body.

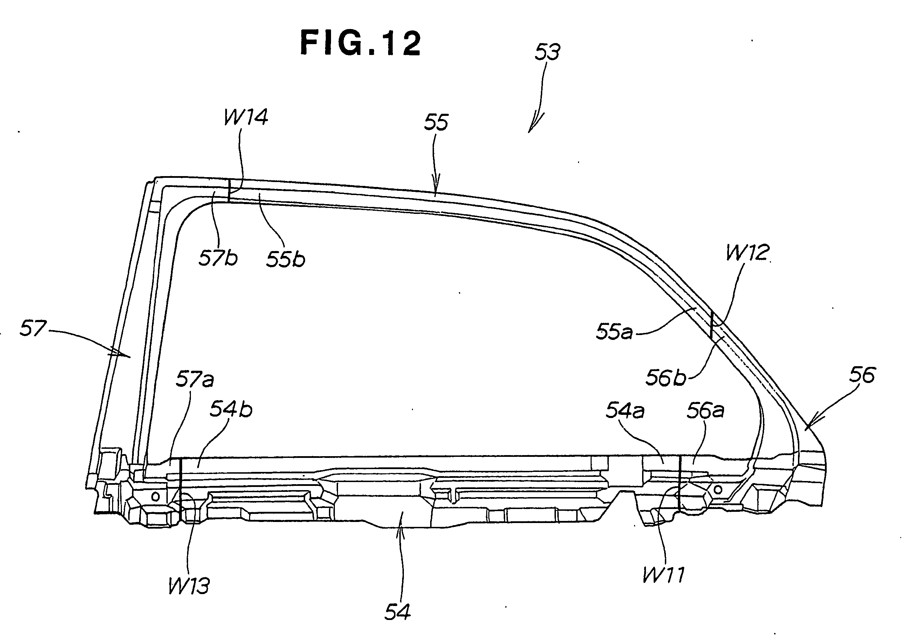

FIG. 12 illustrates a sash body 53 for a right rear sash door, viewed from the inside of the vehicle.

The rear sash body 53 is a frame member consisting of a horizontal lower frame member 54 mounted on a door inner panel, an upper frame member 55 positioned above the lower frame member 54, a rear frame member 56 (on the right in the figure) connecting a rear end 54a of the lower frame member 54 and a rear end 55a of the upper frame member 55, and a front frame member 57 (on the left in the figure) connecting a front end 54b of the lower frame member 54 and a front end 55b of the upper frame member 55.

The lower frame member 54 is a horizontal elongated member extending longitudinally. The upper frame member 55 is an elongated member curved downward from the front to the rear. The rear frame member 56 is a short member. The front frame member 57 is a vertically extending member longer than the rear frame member 56. The lower, upper, rear and front frame members 54, 55, 56 and 57 are plate-shaped frame components. The frame components constitute the frame member (rear sash body 53), including the lower, upper, rear and front frame members 54, 55, 56 and 57.

The sash body 53 is, as described above, a frame member formed by joining together the plate-shaped frame components (that is, lower, upper, rear and front frame members 54, 55, 56 and 57), with the space between the lower and upper frame members 54 and 55 becoming smaller toward the rear of the vehicle, and also is an integrally-molded part with the frame components joined together and press molded.

With the thickness of the lower frame member 54 as t11, the upper frame member 55 as t12, the rear frame member 56 as t13 and the front frame member 57 as t14, the relationship between the thicknesses is provided as t11 < t12 < t14 < t13.

Specifically, the thickness t13 of the rear frame member 56 is set greater than the thicknesses t11, t12 and t14 of the lower, upper, front frame members 54, 55 and 57. The thicknesses t13 and t14 of the rear and front frame members 56 and 57 are set greater than the thicknesses t11 and t12 of the lower and upper frame members 54 and 55. The thickness t11 of the lower frame member 54 which may have low rigidity is set smaller than the thicknesses t12, t13 and t14 of the upper, rear and front frame members 55 to 57.

The vertical cross-sectional configuration of the lower frame member 54 is substantially the same as that of the lower frame member 24 shown in FIG. 7, to the inside of which an upper portion of the door inner panel 21 may be joined. The vertical cross-sectional configuration of the upper frame member 55 is the same as that of the upper frame member 25 shown in FIG. 4, on the outside of which an outer sash may be provided. The vertical cross-sectional configuration of the rear frame member 56 is substantially the same as that of the front frame member 27 shown in FIG. 8. The vertical cross-sectional configuration of the front frame member 57 is substantially the same as that of the rear frame member 26 shown in FIG. 5.

The rear frame member 56 is a member in the form of a C in a side view, with a lower front end portion 56a and an upper front end portion 56b extended forward. The lower front end portion 56a is joined to the rear end 54a of the lower frame member 54 along join line W11. The upper front end portion 56b is joined to the rear end 55a of the upper frame member 55 along join line W12.

The front frame member 57 is a member in the form of a C in a side view, with a lower front end portion 57a and an upper front end portion 57b extended rearward. The lower front end portion 57a is joined to the front end 54b of the lower frame member 54 along join line W13. The upper front end portion 57b is joined to the front end 55b of the upper frame member 55 along join line W14.

The rear sash door 50R of such a configuration has the same functions and effects as those of the right front sash door 20R shown in FIG. 3.

When, as in the sash body 53 of the rear sash door 50R, the space between the lower and upper frame members 54 and 55 becomes smaller toward the rear of the vehicle, the degree of freedom in designing the shape of the rear frame member 56 is generally lower than those the other frame members 54, 55 and 57. This is more significant especially when the sash body 53 is formed by press molding. Thus it is not easy to form the rear frame member 56 in a cross-sectional shape providing desired rigidity after press molding.

The present invention sets the thickness t13 of the rear frame member 56 greater than the thicknesses t11, t12 and t14 of the other frame members 54, 55 and 57, securing sufficient rigidity necessary for the rear frame member 56.

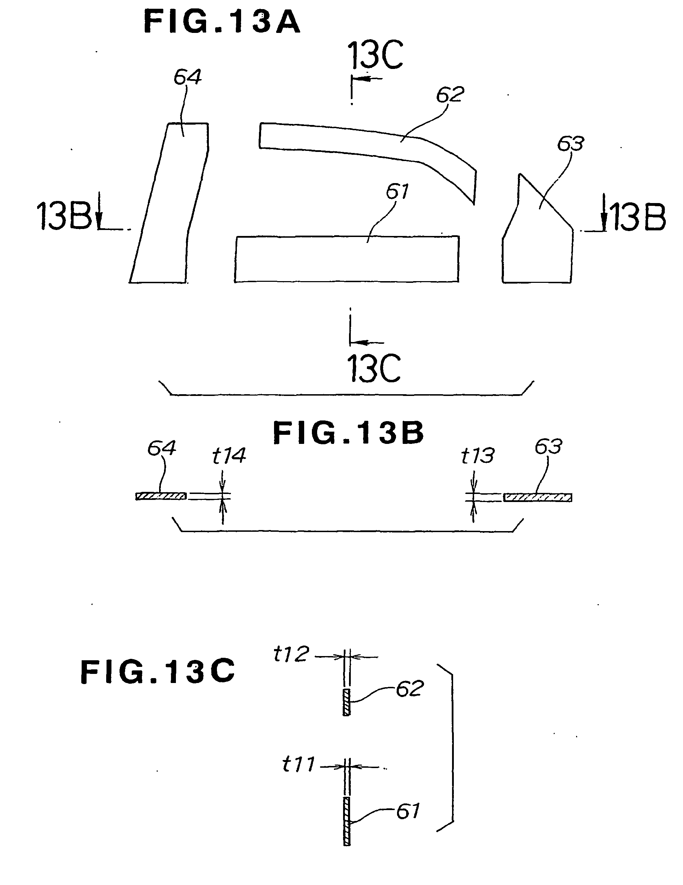

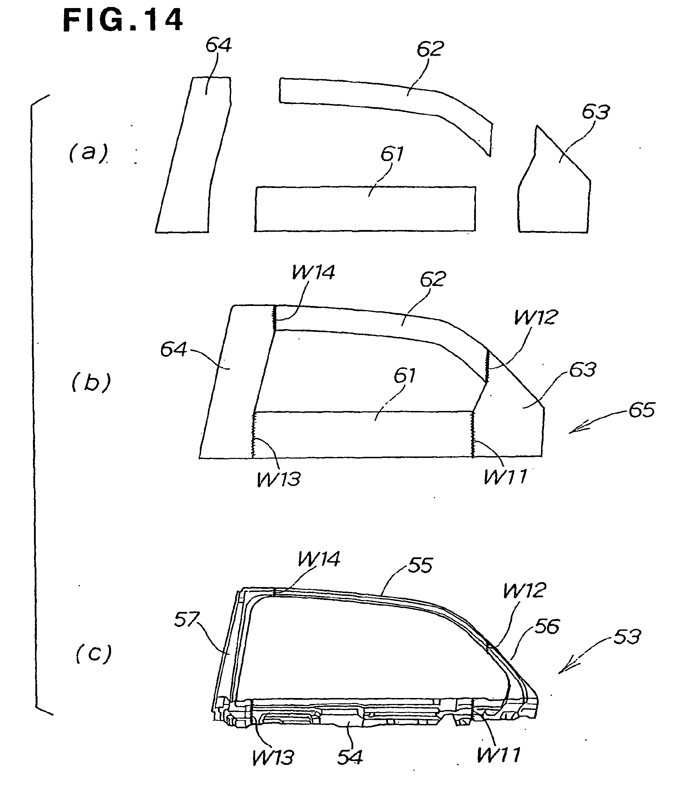

Now, a method of manufacturing the rear sash door 50R of the above configuration will be described with reference to FIGS. 13A to 13C, and FIG. 14.

First, as shown in FIG. 13A, frame components 61, 62, 63 and 64 are die-cut from a plurality of flat plates of different thickness, respectively (first step). The lower frame component 61 is a plate material corresponding to a lower frame member of a sash body. The upper frame component 62 is a plate material corresponding to an upper frame member of the sash body. The rear frame component 63 is a plate material corresponding to a rear frame member of the sash body. The front frame component 64 is a plate material corresponding to a front frame member of the sash body. That is, the frame components 61 to 64 are members cut out in the respectively required shapes for manufacturing the lower, upper, rear and front frame members 54 to 57 of the sash body 53 shown in FIG. 12.

As shown in FIGS. 13B and 13C, the thickness of the lower frame component 61 is t11. The thickness of the upper frame component 62 is t12. The thickness of the rear frame component 63 is t13. The thickness of the front frame component 64 is t14. The relationship between the thicknesses is t11 < t12 < t14 < t13. The thickness t11 of the lower frame component 61 is set at 0.6 mm, t12 of the upper frame component 62 at 0.7 mm, t13 of the rear frame component 63 at 1.4 mm, and t14 of the front frame component 64 at 0.9 mm.

As shown in FIG. 14(a), the frame components 61, 62, 63 and 64 of plate materials are arranged for preparation (second step).

Next, in FIG. 14(b), the frame components 61, 62, 63 and 64 are joined to one another along weld lines W11, W12, W13 and W14, forming a frame member 65 (third step). The frame member 65 of such flat plate material is a collective blank prepared by butt-joining together flat plate materials of different thickness (frame components 61 to 64). The joining together of the frame components 61 to 64 is performed by YAG laser welding.

Next, in FIG. 14(c), the frame member 65 is press-molded to provide the sash body 53 (fourth step).

Next, as in the case of the right front sash door 20R shown in FIG. 2, an outer sash, an outer front panel, and an outer pillar panel are joined to the sash body 23 (fifth step). Then the sash body 53 is joined to an upper portion of a door inner panel and a door outer panel is joined to the outside of the door inner panel (sixth step). Next, to the sash body 53 and the outer sash, a molding, elastic members such as a glass run and a weatherstrip (not shown), the door glass 13 and a door attachment are mounted, completing the right rear sash door 50R (seventh step).

The present invention thus includes, in the process of manufacturing the right rear sash door 50R, the steps of forming the frame member 65 by joining together the frame components 61 to 64 of plate material and press molding the frame member 65 to provide the sash body 53. The present invention thus provides the same functions and effects as in the case of manufacturing the above-described right front sash door 20R.

In the above embodiment, the left front sash door 20L also has the same configuration as that of the right front sash door 20R and is manufactured in the same manner, having the same functions and effects. The left rear sash door 50L also has the same configuration as that of the right rear sash door 50R and is manufactured in the same manner, having the same functions and effects.

As described above, a sash door of the present invention has a sash body made by joining together a plurality of plate-shaped frame components and then press molding them. This allows free setting and combination in dimension and thickness of the frame components, increasing yields, and thereby providing a sash body at low cost. Further, portions of excessive thickness are eliminated, which results in reduction in weight of the sash body. Thus the lightweight and low-cost sash door is provided, which is beneficial for the automobile manufacturing industry.

## Claims

1. A sash door for an automobile, comprising:
a door inner panel (21; 51); and
a sash body (23; 53) joined to an upper portion of said door inner panel (21; 51);
**characterized in that** said sash body (23; 53) is a collective frame member (35; 65) comprising
- a lower frame member (24; 54) mounted to said door inner panel (21; 51),
- an upper frame member (25; 55) positioned above said lower frame member (21; 51),
- a front frame member (27; 57) connecting a front end of said lower frame member (21; 51) and a front end of said upper frame member (25; 55), and
- a rear frame member (26; 56) connecting a rear end of said lower frame member (21; 51) and a rear end of said upper frame member (25; 55),
each of said frame members (24-27; 54-57) being formed from a plate-shaped frame component (31-34; 51-54), said plate-shaped frame components (31-34; 51-54) being joined to one another and integrally press molded;
each of said front frame member (27; 57) and said rear frame member (26; 56) having on its respective lower end a portion (27c) to which an upper portion of said door inner panel (21; 51) is joined; and the thicknesses of said frame components (34, 33; 64, 63) for said front frame member (27; 57) and said rear frame member (26; 56) being greater than that of the other frame components (31, 32; 61, **62).**

2. A sash door as set forth in claim 1, wherein
the thickness of said lower frame member (24; 54) is smaller than the thicknesses of said upper frame member (25; 55), said front frame member (27; 57) and said rear frame member (26; 56).

3. A sash door for an automobile, comprising:
a door inner panel (21; 51); and
a sash body (23; 53) joined to an upper portion of said door inner panel (21; 51);
**characterized in that** said sash body (23; 53) is a collective frame member (35; 65) comprising
- a lower frame member (24; 54) mounted to said door inner panel (21; 51),
- an upper frame member (25; 55) positioned above said lower frame member (21; 51),
- a front frame member (27; 57) connecting a front end of said lower frame member (21; 51) and a front end of said upper frame member (25; 55), and
- a rear frame member (26; 56) connecting a rear end of said lower frame member (21; 51) and a rear end of said upper frame member (25; 55),
each of said frame members (24-27; 54-57) being formed from a plate-shaped frame component (31-34; 51-54), said plate-shaped frame components (31-34; 51-54) being joined to one another and integrally press molded;
the thickness of said lower frame member (24; 54) being smaller than the thicknesses of said upper frame member (25; 55), said front frame member (27; 57) and said rear frame member (26; 56).

4. A sash door as set forth in any of claims 1 to 3, wherein:
the space between said lower frame member (24) and said upper frame member (25) becomes smaller toward the front of the vehicle; and
the thickness of said front frame member (27) is greater than the thicknesses of said lower frame member (24), said upper frame member (25) and said rear frame member (26).

5. A sash door as set forth in any of claims 1 to 3, wherein
the space between said lower frame member (54) and said upper frame member (55) becomes smaller toward the rear of the vehicle; and
the thickness of said rear frame member (56) is greater than the thicknesses of said lower frame member (54), said upper frame member (55) and said front frame member (57).

## Patentansprüche

1. Fensterrahmentür für ein Kraftfahrzeug, umfassend:
ein Türinnenblech (21; 51); und
einen Fensterrahmenkörper (23; 53), welcher mit einem oberen Abschnitt von dem Türinnenblech (21; 51) verbunden ist;
**dadurch gekennzeichnet, dass** der Fensterrahmenkörper (23; 53) ein Kollektivrahmenelement (35; 65) ist, umfassend:
- ein unteres Rahmenelement (24; 54), welches an dem Türinnenblech (21; 51) angebracht ist,
- ein oberes Rahmenelement (25; 55), welches oberhalb von dem unteren Rahmenelement (21; 51) angeordnet ist,
- ein vorderes Rahmenelement (27; 57), welches ein vorderes Ende von dem unteren Rahmenelement (21; 51) und ein vorderes Ende von dem oberen Rahmenelement (25; 55) verbindet, und
- ein hinteres Rahmenelement (26; 56), welches ein hinteres Ende von dem unteren Rahmenelement (21; 51) und ein hinteres Ende von dem oberen Rahmenelement (25; 55) verbindet,
wobei jedes der Rahmenelemente (24-27; 54-57) aus einem plattenförmigen Rahmenteil (31-34; 51-54) geformt ist, wobei die plattenförmigen Rahmenteile (31-34; 51-54) miteinander verbunden und integral pressgeformt sind;
wobei jedes von dem vorderen Rahmenelement (27; 57) und dem hinteren Rahmenelement (26; 56) an seinem jeweiligen unteren Ende einen Abschnitt (27c) hat, mit welchem ein oberer Abschnitt von dem Türinnenblech (21; 51) verbunden ist; und die Dicken von den Rahmenteilen (34, 33; 64, 63) für das vordere Rahmenelement (27; 57) und das hintere Rahmenelement (26; 56) größer sind als die von den anderen Rahmenteilen (31, 32; 61, 62).

2. Fensterrahmentür nach Anspruch 1, wobei die Dicke von dem unteren Rahmenelement (24; 54) kleiner ist als die Dicken von dem oberen Rahmenelement (25; 55), dem vorderen Rahmenelement (27; 57) und dem hinteren Rahmenelement (26; 56).

3. Fensterrahmentür für ein Kraftfahrzeug, umfassend:
ein Türinnenblech (21; 51); und
einen Fensterrahmenkörper (23; 53), welcher mit einem oberen Abschnitt von dem Türinnenblech (21; 51) verbunden ist;
**dadurch gekennzeichnet, dass** der Fensterrahmenkörper (23; 53) ein Kollektivrahmenelement (35; 65) ist, umfassend:
- ein unteres Rahmenelement (24; 54), welches an dem Türinnenblech (21; 51) angebracht ist,
- ein oberes Rahmenelement (25; 55), welches oberhalb von dem unteren Rahmenelement (21; 51) angeordnet ist,
- ein vorderes Rahmenelement (27; 57), welches ein vorderes Ende von dem unteren Rahmenelement (21; 51) und ein vorderes Ende von dem oberen Rahmenelement (25; 55) verbindet, und
- ein hinteres Rahmenelement (26; 56), welches ein hinteres Ende von dem unteren Rahmenelement (21; 51) und ein hinteres Ende von dem oberen Rahmenelement (25; 55) verbindet,
wobei jedes der Rahmenelemente (24-27; 54-57) aus einem plattenförmigen Rahmenteil (31-34; 51-54) gebildet ist, wobei die plattenförmigen Rahmenteile (31-34; 51-54) miteinander verbunden sind und integral pressgeformt sind;
wobei die Dicke von dem unteren Rahmenelement (24; 54) kleiner als die Dicken von dem oberen Rahmenelement (25; 55), dem vorderen Rahmenelement (27; 57) und dem hinteren Rahmenelement (26; 56) ist.

4. Fensterrahmentür nach einem der Ansprüche 1 bis 3, wobei:
der Raum zwischen dem unteren Rahmenelement (24) und dem oberen Rahmenelement (25) zur Vorderseite von dem Fahrzeug hin schmäler wird; und
die Dicke von dem vorderen Rahmenelement (27) größer als die Dicken von dem unteren Rahmenelement (24), dem oberen Rahmenelement (25) und dem hinteren Rahmenelement (26) ist.

5. Fensterrahmentür nach einem der Ansprüche 1 bis 3, wobei:
der Raum zwischen dem unteren Rahmenelement (54) und dem oberen Rahmenelement (55) zur Rückseite von dem Fahrzeug hin schmäler wird; und
die Dicke von dem hinteren Rahmenelement (56) größer als die Dicken von dem unteren Rahmenelement (54), dem oberen Rahmenelement (55) und dem vorderen Rahmenelement (57) ist.

## Revendications

1. Porte vitrée pour une automobile, comprenant :
un panneau intérieur de porte (21 ; 51) et
un corps formant cadre (23, 53) réuni à une portion supérieure dudit panneau intérieur de porte (21, 51) ;
**caractérisée en ce que** ledit corps formant cadre (23 ; 53) est un élément de cadre collectif (35 ; 65) comprenant :
- un élément de cadre inférieur (24 ; 54) monté sur ledit panneau intérieur de porte (21 ; 51),
- un élément de cadre supérieur (25 ; 55) positionné au-dessus dudit élément de cadre inférieur (21 ; 51),
- un élément de cadre avant (27 ; 57) raccordant une extrémité avant dudit élément de cadre inférieur (21 ; 51) et une extrémité avant dudit élément de cadre supérieur (25 ; 55), et
- un élément de cadre arrière (26 ; 56) raccordant une extrémité arrière dudit élément de cadre inférieur (21 ; 51) et une extrémité arrière dudit élément de cadre supérieur (25 ; 55),
chacun desdits éléments de cadre (24-27 ; 54-57) étant formé à partir d'un composant de cadre en forme de plaque (31-34 ; 51-54), lesdits composants de cadre en forme de plaques (31-34 ; 51-54) étant réunis l'un à l'autre et moulés d'une seule pièce par pression;
chacun dudit élément de cadre avant (27; 57) et dudit élément de cadre arrière (26 ; 56) ayant sur son extrémité inférieure respective une portion (27c) à laquelle est réunie une portion supérieure dudit panneau intérieur de porte (21 ; 51) ; et les épaisseurs desdits composants de cadre (34, 33 ; 64, 63) pour ledit élément de cadre avant (27 ; 57) et ledit élément de cadre arrière (26 ; 56) étant supérieures à celle des autres composants de cadre (31, 32 ; 61, 62).

2. Porte vitrée pour une automobile selon la revendication 1, dans laquelle l'épaisseur dudit élément de cadre inférieur (24 ; 54) sont inférieures aux épaisseurs dudit élément de cadre supérieur (25 ; 55), dudit élément de cadre avant (27 ; 57) et dudit élément de cadre arrière (26 ; 56).

3. Porte vitrée pour une automobile, comprenant :
un panneau intérieur de porte (21 ; 51) ; et
un corps de cadre (23 ; 53) réuni à une portion supérieure dudit panneau intérieur de porte (21 ; 51) ;
**caractérisée en ce que** ledit corps de cadre (23 ; 53) est un élément de cadre collectif (35 ; 65) comprenant
- un élément de cadre inférieur (24 ; 54) monté sur ledit panneau intérieur de porte (21 ; 51),
- un élément de cadre supérieur (25 ; 55) positionné au-dessus dudit élément de cadre inférieur (21 ; 51),
- un élément de cadre avant (27 ; 57) raccordant une extrémité avant dudit élément de cadre inférieur (21 ; 51) et une extrémité avant dudit élément de cadre supérieur (25 ; 55), et
- un élément de cadre arrière (26 ; 56) raccordant une extrémité arrière dudit élément de cadre inférieur (21 ; 51) et une extrémité arrière dudit élément de cadre supérieur (25 ; 55),
chacun desdits éléments de cadre (24-27 ; 54-57) étant formé à partir d'un composant de cadre en forme de plaque (31-34 ; 51-54), lesdits composants de cadre en forme de plaques (31-34 ; 51-54) étant réunis l'un à l'autre et moulés d'une seule pièce par pression ;
l'épaisseur dudit élément de cadre inférieur (24 ; 54) étant inférieure aux épaisseurs dudit élément de cadre supérieur (25 ; 55), dudit élément de cadre avant (27 ; 57) et dudit élément de cadre arrière (26 ; 56).

4. Porte vitrée pour une automobile selon l'une quelconque des revendications 1 à 3, dans laquelle :
l'espace entre ledit élément de cadre inférieur (24) et ledit élément de cadre supérieur (25) diminue vers l'avant du véhicule ; et
l'épaisseur dudit élément de cadre avant (27) est supérieure aux épaisseurs dudit élément de cadre inférieur (24), dudit élément de cadre supérieur (25) et dudit élément de cadre arrière (26).

5. Porte vitrée pour une automobile selon l'une quelconque des revendications 1 à 3, dans laquelle :
l'espace entre ledit élément de cadre inférieur (54) et ledit élément de cadre supérieur (55) diminue vers l'arrière du véhicule ; et
l'épaisseur dudit élément de cadre arrière (56) est supérieure aux épaisseurs dudit élément de cadre inférieur (54), dudit élément de cadre supérieur (55) et dudit élément de cadre avant (57).
